# EUROPÄISCHE PATENTSCHRIFT

(11) **EP 1 090 526 B1**
(45) Veröffentlichungstag und Bekanntmachung des Hinweises auf die Patenterteilung: **19.12.2001**
(21) Anmeldenummer: 99936379.9
(22) Anmeldetag: 01.06.1999
(51) Int. Cl.: H04Q 7/38

(54) **ZUGRIFFSTEUERUNG IN EINEM FUNKKOMMUNIKATIONSSYSTEM**
ACCESS CONTROL IN A RADIO COMMUNICATION SYSTEM
COMMANDE D'ACCES DANS UN SYSTEME DE RADIOTELECOMMUNICATION

(30) Priorität: 23.06.1998 DE 19827916
(43) Veröffentlichungstag der Anmeldung: 11.04.2001
(73) Patentinhaber: SIEMENS AKTIENGESELLSCHAFT, 80333 München (DE)
(72) Erfinder: BENZ, Michael, D-13629 Berlin (DE); KLEIN, Anja, D-10709 Berlin (DE); SITTE, Armin, D-10405 Berlin (DE); ULRICH, Thomas, D-67098 Bad Dürkheim (DE)
(86) Internationale Anmeldenummer: DE9901611
(87) Internationale Veröffentlichungsnummer: WO9967965

(56) Entgegenhaltungen:
- WO-A-97/19525
- WO-A-98/14020
- WO-A-99/17582
- US-A- 5 257 408

## Beschreibung

Die Erfindung betrifft ein Verfahren und ein Funk-Kommunikationssystem zur Datenübertragung, insbesondere ein Mobilfunksystem mit breitbandigen Kanälen, in denen Signale nach einem TDMA/CDMA- oder CDMA-Teilnebmerseparierungsverfahren übertragen werden.

Die US 5,257,408 A zeigt ein Verfahren zur Überwachung der Dienstgüte in einem Kommunikationssystem, bei dem eine Basisstation ihre eigene Sendeleistung sowie ihre Eingangsempfindlichkeit sendet, und bei dem die Mobilstation aus diesen Parametern sowie der gemessenen Signalstärke der Basisstation und der eigenen Sendeleistung die Dämpfung in Sende- bzw. Empfangsrichtung berechnet und entscheidet, ob die Basisstation geeignet ist, einen Dienst anzufordern.

Die WO 98/14020 A beschreibt eine Methode, um eine mögliche Dienstgüte für einen Mobilteilnehmer festzulegen, abhängig von den aktuellen Bedingungen des Funksystems, wie zum Beispiel der freien Übertragungskapazität, sowie der Geschwindigkeit des Mobilteilnehmers und seiner Distanz zur Basisstation.

Die WO 99/17582 A beschreibt ein Verfahren, um den Zugriff auf Dienste einer Funkzelle zu unterbinden, falls durch diesen Zugriff die Dienstgüte in dieser Funkzelle insgesamt unter einen zulässigen Schwellwert sinkt.

In Funk-Kommunikationssystemen werden Informationen (beispielsweise Sprache, Bildinformationen, Internet-Nachrichten oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TDMA/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

In Funk-Kommunikationssystemen dienen die Organisationsinformationen dazu, daß Mobilstationen in einer Funkzelle einer Basisstation mit den für die Funkzelle nötigen Daten versorgt werden. Organisationsinformationen sind Angaben über die Funkzelle, deren Kanalstruktur und in der Funkzelle verfügbare Dienste und Optionen. Die Organisationsinformationen dienen somit der Mobilstation zur Synchronisation und Auswahl der Funkzelle.

Aus dem GSM-Mobilfunksystem und für zukünftige Mobilfunksysteme aus DE 198 10 285 ist es bekannt, pro Rahmen in Abwärtsrichtung einen Zeitschlitz zur Übertragung von Organisationsinformationen vorzusehen. Dazu wird üblicherweise der erste Zeitschlitz des Rahmens herangezogen. Damit liegen feste Abstände zwischen den Aussendungen der Organisationsinformationen vor, die derart geplant sind, daß auch in ungünstigen Verkehrslaststituationen und bei maximal erlaubter Geschwindigkeit der Mobilstationen eine ordnungsgemäße Auswertung der Organisationsinformationen und eine Übergabe der Mobilstationen für alle Dienste zwischen verschiedenen Funkzellen unterstützt wird. Auch bei W-CDMA-Übertragungsverfahren werden Organisationsinformationen nach einer Rahmenstruktur in einem Zeitschlitz oder über mehrere Zeitschlitze kontinuierlich übertragen.

Die Empfangbarkeit der üblicherweise mit hoher und konstanter Leistung gesendeten Organisationsinformationen sind für die Mobilstation das einzig verfügbare Kriterium, ob ein Einbuchen in der Funkzelle möglich ist. Ist ein Einbuchen, d.h. der Aufbau einer Verbindung möglich, so können die verfügbaren Dienste angefordert werden. Beim GSM-Mobilfunksystem sind dies Sprach- bzw. Kurznachrichtendienste.

Soll jedoch die Angebotspalette an Diensten erweitert werden, so ist auch für den anspruchsvollsten Dienst sicherzustellen, daß dieser bei ausreichender Empfangbarkeit der Organisationsinformationen ebenfalls gut empfangbar ist. Für die Funknetzplanung bedeutet dies starke Einschränkungen.

Der Erfindung liegt die Aufgabe zugrunde, ein Verfahren und ein Funk-Kommunikationssystem mit mehreren Diensten anzugeben, die eine größere Flexibilität bei der Funknetzplanung erlauben. Diese Aufgabe wird durch das Verfahren mit den Merkmalen des Anspruchs 1 und das Funk-Kommunikationssystem mit den Merkmalen des Anspruchs 15 gelöst. Vorteilhafte Weiterbildungen sind den Unteransprüchen zu entnehmen.

Erfindungsgemäß werden in einem Funk-Kommunikationssystem, das in einer Funkzelle mehrere Dienste über eine Funkschnittstelle für Mobilstationen anbietet, zu zumindest einem Dienst eine individuelle Kenngröße bezüglich einer notwendigen Empfangbarkeit bestimmt und von der Basisstation gesendet.

Durch eine Mobilstation wird die Kenngröße empfangen und ausgewertet, anschließend die aktuelle Empfangbarkeit von Aussendungen der Basisstation mit der Kenngröße verglichen und abhängig vom Vergleichsergebnis der Dienst durch die Mobilstation angefordert.

Die Dienstanforderung ist somit nicht mehr allein von der aktuellen Empfangbarkeit von Aussendungen der Basisstation abhängig. Die aktuelle Empfangbarkeit muß für einen Dienst zusätzlich mit den dienstspezifischen Kenngrößen bezüglich der Empfangbarkeit verglichen werden. Wird diese Kenngröße eingehalten, so kann die Anforderung zu diesem Dienst erfolgen. Die Planung von Organisationskanälen als Basis für die Bestimmung der Empfangbarkeit ist damit weitgehend unabhängig von der Planung der Versorgung mit den einzelnen Diensten.

Jeder Dienst kann seine eigene Reichweite haben, die nicht zwangsläufig mit der Zellgröße übereinstimmen muß. Gleichzeitig kann die Mobilstation dezentral eine Berechtigung zu einem Dienst abfragen, bevor ein Zugriff auf die Funkschnittstelle erfolgt.

Die Kenngröße ist vorteilhafterweise ein auf eine maximal zulässige Dämpfung, eine minimal erforderliche Empfangsfeldstärke, einen minimal erforderlichen Signal/Stör-Abstand und/oder auf eine maximal zulässige Signallaufzeit bezogener Wert. Es können pro Dienst auch mehrere Kenngrößen gesendet und ausgewertet werden. Bei mehreren ausgewerteten Kenngrößen erhöht sich die Sicherheit, daß der Dienst nach Verbindungsaufbau auch zuverlässig aufrechterhalten werden kann.

Bei der netzseitigen Bestimmung der Kenngröße wird eine maximale Datenrate pro Dienst oder für die gesamte Funkschnittstelle, eine zu garantierende Dienstqualität des Dienstes und/oder eine aktuelle Auslastung der Funkschnittstelle berücksichtigt. Damit kann für jeden Dienst oder zumindest für die Dienste, deren Reichweiten nicht ständig mit der der Organisationsinformationen zusammenfällt, ein oder mehrere Kriterien gebildet werden, die es jeder Mobilstation ermöglichen, auf ihrer aktuellen Position und bei ihren aktuellen Empfangsbedingungen, die Erreichbarkeit eines Dienstes ohne vorherigen Dialog festzustellen.

Die individuellen Dienste sind dabei Sprachdienste, Notrufdienste, Kurznachrichtendienste, Teletextdienste, Faksimiledienste, Internetdienst oder Bildübertragungsdienste. Das Funk-Kommunikationssystem kann diese Dienste anbieten, ohne daß deren Erreichbarkeit erst von der Mobilstation ausgetestet werden muß. Eine unnötige Belastung der Funkschnittstelle durch nicht erfolgreiche Anforderung eines Dienstes wird vermieden, wenn vorteilhafterweise bei negativen Vergleichsergebnis die Anforderung bezüglich dieser Basisstation gesperrt wird. Dies bedeutet, daß solange sich die aktuellen Empfangsbedingungen nicht verbessern, von der Mobilstation keine Anforderung an die Basisstation gesendet wird.

Nach einer vorteilhaften Ausbildung der Erfindung wird die aktuelle Empfangbarkeit aus der Auswertung von Empfangssignalen eines Organisationskanals abgeleitet und die Funkschnittstelle nach einem TDD-Übertragungsverfahren mit breitbandigen Kanälen organisiert. Damit ist die Anwendung des erfindungsgemäßen Verfahrens in Mobilfunksystemen der 3. Generation gewährleistet, die mit sehr unterschiedlichen Zellgrößen, asymmetrischen Auslastungen der Funkschnittstelle, vielen unterschiedlichen Diensten und Anwendungen sowohl im flächendeckenden Mobilfunksystem als auch im Heimbereich große Anforderungen stellt.

Im folgenden wird die Erfindung anhand von Ausführungsbeispielen bezugnehmend auf zeichnerische Darstellungen näher erläutert.

Dabei zeigen
- Fig 1: ein Blockschaltbild eines Mobilfunksystems,
- Fig 2: eine schematische Darstellung der Rahmenstruktur des TDD-Übertragungsverfahrens,
- Fig 3 - 4: schematische Darstellungen der Versorgung von Mobilstationen mit unterschiedlichen Diensten,
- Fig 5: ein Ablaufdiagramm der Übertragung von Organisationsinformationen, und
- Fig 6: ein vereinfachtes Blockschaltbild einer Basisstation und einer Mobilstation.

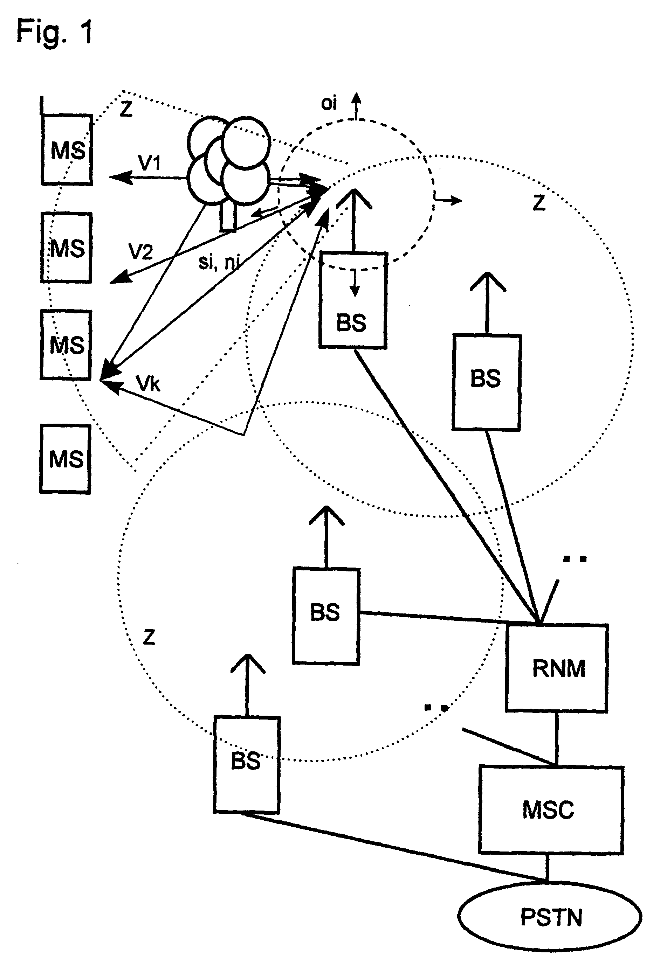

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro installierter Basisstation BS auch mehrere Funkzellen Z versorgt. Die Einrichtung RNM zum Zuteilen von funktechnischen Ressourcen und mehrere Basisstationen BS bilden ein Basisstationssystem.

In Fig 1 sind Verbindungen V, beispielhaft als V1, V2, Vk bezeichnet, zur Übertragung von Nutzinformationen ni und Signalisierungsinformationen si zwischen Mobilstationen MS und einer Basisstation BS dargestellt. Die Übertragung von Organisationsinformationen oi erfolgt an mehrere Mobilstationen MS in Form einer Punkt-zu-Multipunkt-Verbindung.

Ein Operations-und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß. Auch Basisstationen, die als Heimbasisstationen im privatem Bereich eingesetzt sind ohne von der Funknetzplanung betroffen zu sein, können Verbindungen zu Mobilstationen MS aufbauen. Diese Heimbasisstationen sind an ein Festnetz angeschlossen.

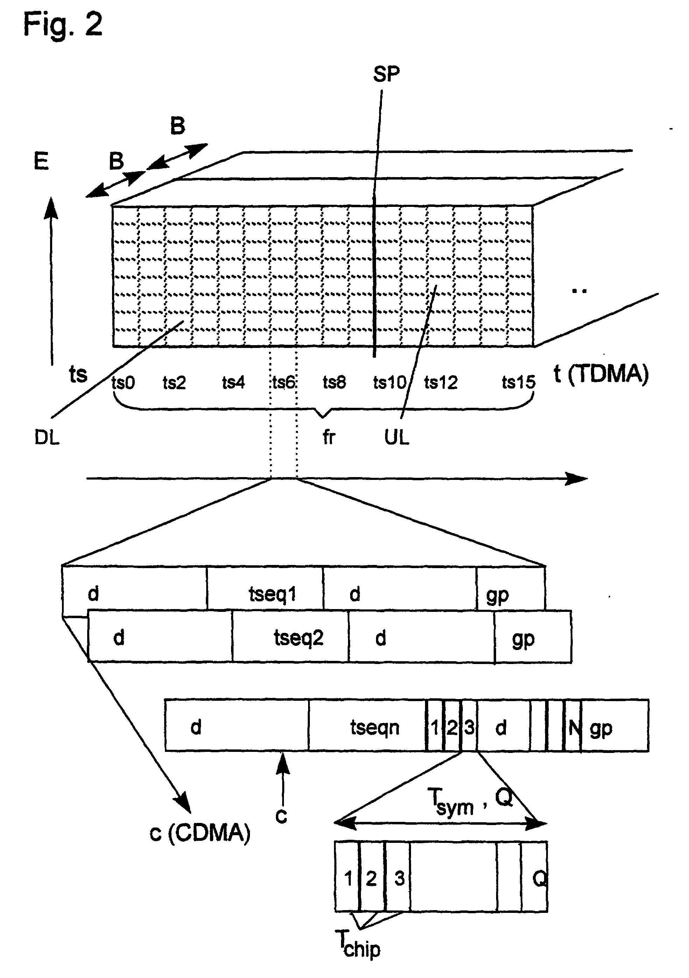

Eine Rahmenstruktur der Funkübertragung ist aus Fig 2 ersichtlich. Gemäß einer TDMA-Komponente ist eine Aufteilung eines breitbandigen Frequenzbereiches, beispielsweise der Bandbreite B = 5 MHz in mehrere Zeitschlitze ts gleicher Zeitdauer, beispielsweise 16 Zeitschlitze ts0 bis ts15 vorgesehen. Ein Teil der Zeitschlitze ts0 bis ts9 werden in Abwärtsrichtung DL und ein Teil der Zeitschlitze ts10 bis ts15 werden in Aufwärtsrichtung UL benutzt. Dazwischen liegt ein Umschaltpunkt SP. Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen.

Innerhalb eines Zeitschlitzes, der zur Übertragung von Informationen oi, si, ni vorgesehen ist, werden Informationen mehrerer Verbindungen in Funkblöcken übertragen. Alternative Ausführungsbeispiele sehen eine zeitkontinuierliche Übertragung der Informationen oi, si, ni vor. Diese Funkblöcke zur Nutzdatenübertragung bestehen aus Abschnitten mit Daten d, in denen empfangsseitig bekannte Trainingssequenzen tseq1 bis tseqn eingebettet sind. Die Daten d sind verbindungsindividuell mit einer Feinstruktur, einem Teilnehmerkode c, gespreizt, so daß empfangsseitig beispielsweise n Verbindungen durch diese CDMA-Komponente separierbar sind.

Die Spreizung von einzelnen Symbolen der Daten d bewirkt, daß innerhalb der Symboldauer Tsym Q Chips der Dauer Tchip übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signallaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden 16 Zeitschlitze ts zu einem Rahmen fr zusammengefaßt.

Die verwendeten Parameter der Funkschnittstelle sind vorteilhafterweise:

| | |
|---|---|
| Chiprate | 4,096 Mcps |
| Rahmendauer | 10 ms |
| Anzahl Zeitschlitze | 16 |
| Dauer eines Zeitschlitzes | 625 µs |
| Spreizfaktor | 16 (aber variabel) |
| Modulationsart | QPSK |
| Bandbreite | 5 MHz |
| Frequenzwiederholungswert | 1 |

Diese Parameter ermöglichen eine bestmögliche Harmonisierung mit einem FDD (frequency division duplex) Modus für die 3. Mobilfunkgeneration. Das erfindungsgemäße Verfahren ist jedoch auch im FDD-Modus anwendbar.

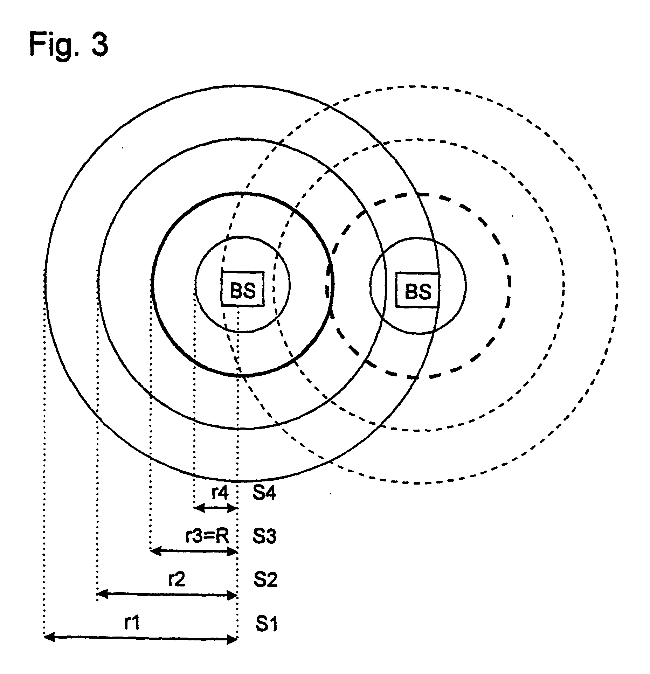

Fig 3 zeigt zwei benachbarte Basisstationen BS, die jeweils Dienste S, z.B. S1 bis S3 anbieten, deren Reichweite r1 bis r4 unterschiedlich ist. Nach Fig 3 sei R der räumliche Zellradius, welcher sich durch den räumlichen Abstand der Basisstationen BS ergibt, wobei der Abstand gleich 2R ist. R wird entsprechend den Diensten S gewählt, die flächendeckend angeboten werden sollen. Im Beispiel der Fig 3 sind es die zu den Reichweiten r1, r2 und r3 gehörigen Dienste S1, S2, S3. Der Dienst S4 steht nicht flächendeckend zur Verfügung.

Aus Fig 3 ist ebenfalls ersichtlich, daß weniger anspruchsvolle Dienste über die Zellgrenzen hinaus verfügbar sind. Diese Dienste S1, S2 sind somit auch in Nachbarzellen empfangbar, unabhängig davon, ob sie zusätzlich auch in diesen Funkzellen angeboten werden. Es entstehen überlappende Versorgungsbereiche unterschiedlicher Basisstationen BS, in denen die Basisstation BS für einen Dienst S1, S2 gewählt werden kann. Diese Überlappung ist beabsichtigt und wird nicht durch eine Beschränkung der Reichweite des Organisationskanals BCCH verhindert.

Diese Überlappung ist insbesondere auch für die Versorung von teilnehmerintensiven Gebieten innerhalb von Funkzellen, sogenannten "hot spots" von Bedeutung. In diesen Gebieten ist die Teilnehmerdichte größer, so daß die von der ersten Basisstation BS1 zur Verfügung gestellten funktechnischen Ressourcen mitunter nicht ausreichen. Gemäß der Erfindung kann für den Dienst S1 die zweite Basisstation BS2 einen Teil des Verkehrs übernehmen. Die Ressourcenverteilung im Funknetz ist durch die Entkoppelung von Reichweite R der Funkzelle zu Reichweite r1 bis r4 eines Dienstes S wesentlich flexibler.

Damit die Mobilstationen MS frühzeitig, d.h. vor einer Anforderung eines Dienstes S, die Verfügbarkeit des Dienstes S feststellen können, wird für zumindest einen Dienst S eine individuelle Kenngröße ke bezüglich der Empfangbarkeit des Dienstes S von der Basisstation BS gesendet, vorteilhafterweise in den Organisationsinformationen oi.

Die Kenngrößen ke werden netzseitig aus einer maximalen Datenrate pro Dienst oder für die gesamte Funkschnittstelle, einer zu garantierenden Dienstqualität des Dienstes und/oder der aktuelle Auslastung der Funkschnittstelle abgeleitet. Alternativ dazu kann die Kenngröße auch in den Mobilstationen MS fest gespeichert sein und nur unter bestimmten Bedingungen zusätzlich in einer Funkzelle übertragen und damit aktualisiert werden.

Das Senden der Kenngröße ke schafft eine Flexibilität von Funkzelle zu Funkzelle, die zudem zeit- und damit lastabhängig sein kann. Diese Flexibilität erlaubt es, den Verkehr in den Funkzellen aktiv zu beeinflussen. Wird die Kenngröße für einen Dienst S in einer Zelle erhöht, so werden neu sich einbuchende Mobilstationen MS Nachbarzellen mit niedrigeren Kenngrößen ke für diesen Dienst S bevorzugen, falls diese verfügbar sind. Auch kann das Verhältnis von größeren zu kleineren Zellen individuell für jeden Dienst gestaltet werden.

Die Kenngröße ke ist ein Wert, der
- auf eine maximal zulässige Dämpfung,
- eine minimal erforderliche Empfangsfeldstärke,
- einen minimal erforderlichen Signal/Stör-Abstand und/oder
- eine maximal zulässige Signallaufzeit bezogen ist.
Dabei kann die Kenngröße ke absolut und relativ zu einem Referenzwert definiert werden.

Eine Kenngröße ke kann mehrere dieser Werte vereinen, es ist jedoch auch alternativ möglich, mehrere Kenngrößen ke für jeden Dienst getrennt zu übertragen. Für die Entscheidung über die Verfügbarkeit eines Dienstes sind somit mehrere Vergleiche nötig, die mit den Kenngrößen ke als Entscheidungsschwellen durchgeführt werden. Eine unnötige Belastung der Funkschnittstelle durch eine nicht erfolgreiche Anforderung eines Dienst S wird vermieden, indem bei negativen Vergleichsergebnis die Anforderung des Dienstes S bezüglich der Basisstation BS, für deren Aussendungen der Vergleich angestellt wurde, gesperrt wird.

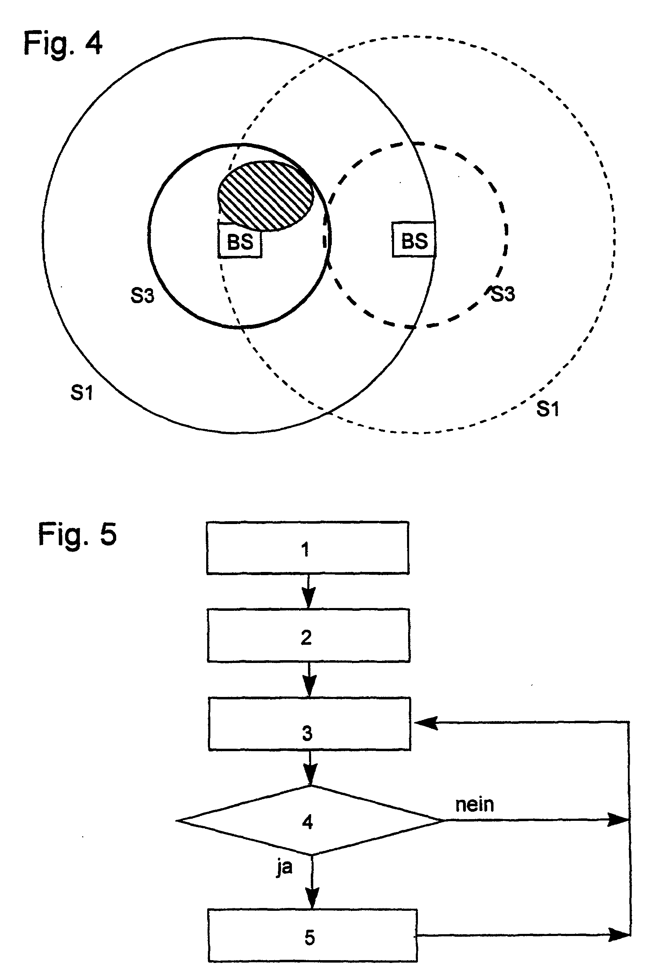

Das erfindungsgemäße Verfahren ist in Fig 5 schematisch dargestellt. In einem ersten Schritt werden Organisationsinformationen oi mittels eines TDMA/CDMA- oder CDMA-Teilnehmerseparierungsverfahrens gesendet, die zumindest eine Kenngröße ke über einen Dienst S enthalten. In einem zweiten Schritt empfängt die Mobilstation MS. die Kenngröße ke und wertet sie aus.

In einem dritten Schritt wird von der Mobilstation MS die aktuelle Empfangbarkeit von Aussendungen der Basisstation ermittelt. Dies erfolgt durch Auswertungen der Empfangssignale des Organisationskanals BCCH, so daß die korrespondierenden aktuellen Werte für die Dämpfung, die Empfangsfeldstärke, den Signal/Stör-Abstand und/oder die Signallaufzeit vorliegen.

In einem vierten Schritt werden die Werte der aktuellen Empfangbarkeit mit der Kenngröße verglichen. Ist die aktuelle Empfangbarkeit für den gewünschten Dienst ausreichend, so wird in einem fünften Schritt der Dienst S von der Mobilstation MS angefordert. Ansonsten wird die aktuelle Empfangbarkeit weiter überwacht bzw. Aussendungen weiterer Basisstationen BS ausgewertet.

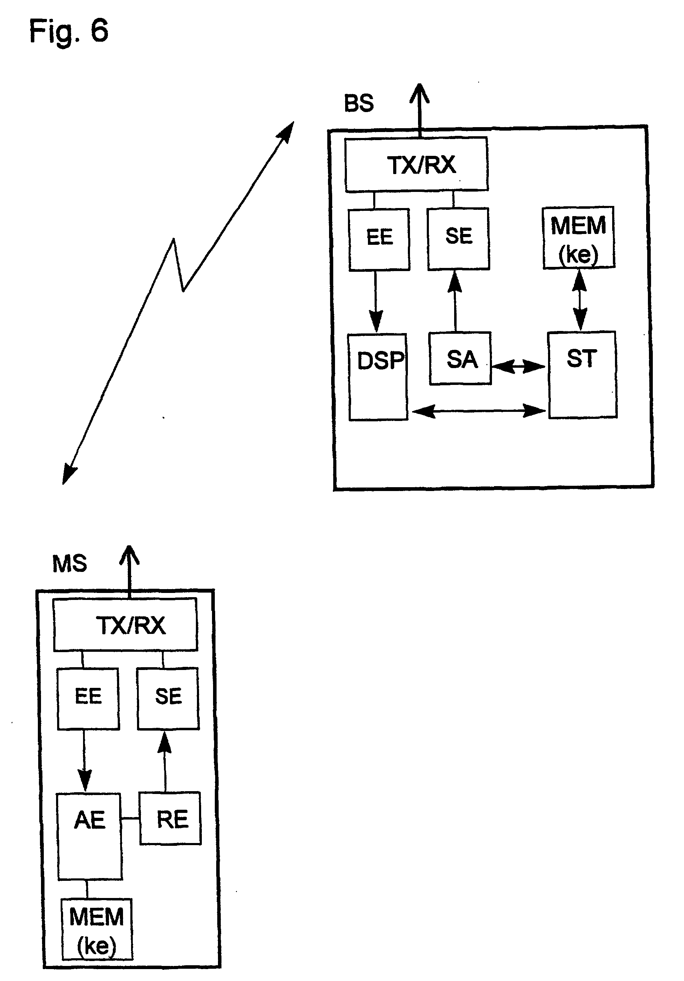

Die Informationsübertragung wird in einer Basisstation BS nach Fig 6 durchgeführt, wobei die Administrierung der Angaben für die angebotenen Dienste und deren Kenngrößen ke durch das Organisations- und Wartungszentrum OMC beeinflußt und die Vorgaben der Einrichtung RNM zur Zuteilung funktechnischer Ressourcen beachtet werden. Die Basisstation BS enthält einen Sende/Empfangsteil TX/RX zur hochfrequenten Verarbeitung von Sende- und Empfangssignalen.

Weiterhin sind eine Sendeeinrichtung SE und einem Empfangseinrichtung EE mit dem Sende/Empfangsteil TX/RX verbunden. In der Sendeeinrichtung SE werden die Signale digital/analog gewandelt, vom Basisband in den Frequenzbereich der Abstrahlung umsetzt und die Sendesignale moduliert. Eine Signalaufbereitungseinrichtung SA hat zuvor die zu übertragenden Informationen oi, si, ni in Funkblöcken zusammengestellt und dem entsprechenden Frequenzband und Zeitschlitz zugeordnet. Eine Signalverarbeitungseinrichtung DSP wertet über die Empfangseinrichtung EE korrespondierend zur Sendeeinrichtung SE verarbeiteten Signale aus und führt eine Kanalschätzung und eine Datendetektion durch.

Das Zusammenwirken der Komponenten, die Einstellung des Umschaltpunkts SP und die Zuordnung der Organisationsinformationen oi zu den Zeitschlitzen wird durch eine Steuereinrichtung ST gesteuert. Zugehörige Daten über den Sende- und den Umschaltpunkt SP, die konkreten Gegebenheiten der Verbindungen und die Kenngrößen ke werden in einer Speichereinrichtung MEM gespeichert.

Die Mobilstation MS enthält korrespondierend zur Basisstation BS einen Sende/Empfangsteil TX/RX, sowie eine Sendeeinrichtung SE und eine Empfangseinrichtung EE. Die durch die Empfangseinrichtung EE empfangenen Signale bezüglich der Kenngrößen ke und der aktuellen Empfangbarkeit werden durch eine Auswerteeinrichtung AE aufgenommen. Die Kenngrößen ke werden sodann mit den zugeordneten aktuellen Empfangbarkeitswerten verglichen. Eine Zwischenspeicherung erfolgt in einer Speichereinrichtung SP. Eine Rufeinrichtung RE veranlaßt bei positiven Vergleichsergebnis das Senden einer Anfordern eines Dienstes S über die Sendeeinrichtung SE.

## Patentansprüche

1. Verfahren zur Datenübertragung zwischen einer Basisstation (BS) und Mobilstationen (MS) in einem Funk-Kommunikationssystem, bei dem
- in einer Funkzelle (Z) der Basisstation (BS) mehrere Dienste (S) über eine Funkschnittstelle für die Mobilstationen (MS) angeboten werden,
- zu zumindest einem Dienst (S) eine individuelle Kenngröße (ke) bezüglich einer notwendigen Empfangbarkeit bestimmt und von der Basisstation (BS) gesendet wird,
durch eine Mobilstation (MS)
- die Kenngröße (ke) empfangen und ausgewertet wird,
- die aktuelle Empfangbarkeit von Aussendungen der Basisstation (BS) mit der Kenngröße (ke) verglichen wird, und
- abhängig vom Vergleichsergebnis der Dienst (S) durch die Mobilstation (MS) angefordert wird.

2. Verfahren nach Anspruch 1, bei dem
die Kenngröße (ke) ein auf eine maximal zulässige Dämpfung bezogener Wert ist.

3. Verfahren nach Anspruch 1, bei dem
die Kenngröße (ke) ein auf eine minimal erforderliche Empfangsfeldstärke bezogener Wert ist.

4. Verfahren nach Anspruch 1, bei dem
die Kenngröße (ke) ein auf einen minimal erforderlichen Signal/Stör-Abstand bezogener Wert ist.

5. Verfahren nach Anspruch 1, bei dem
die Kenngröße (ke) ein auf eine maximal zulässige Signallaufzeit bezogener Wert ist.

6. Verfahren nach einem der vorherigen Ansprüche, bei dem
von der Mobilstation (MS) aus der gesendeten Kenngröße (ke) zumindest eine weitere Kenngröße (ke) für einen zweiten Dienst (S) abgeleitet wird.

7. Verfahren nach einem der vorherigen Ansprüche, bei dem
für die Bestimmung der Kenngröße (ke) eine maximale Datenrate der Funkschnittstelle berücksichtigt wird.

8. Verfahren nach einem der vorherigen Ansprüche, bei dem
für die Bestimmung der Kenngröße (ke) eine maximale Datenrate des Dienstes (S) berücksichtigt wird.

9. Verfahren nach einem der vorherigen Ansprüche, bei dem
für die Bestimmung der Kenngröße (ke) eine zu garantierende Dienstqualität (QoS) des Dienstes (S) berücksichtigt wird.

10. Verfahren nach einem der vorherigen Ansprüche, bei dem
für die Bestimmung der Kenngröße (ke) eine aktuelle Auslastung der Funkschnittstelle berücksichtigt wird.

11. Verfahren nach einem der vorherigen Ansprüche, bei dem
die individuellen Dienste (S) als Sprachdienste, Notrufdienste, Kurznachrichtendienste, Teletextdienste, Faksimiledienste, Internetdienst oder Bildübertragungsdienste ausgebildet sind.

12. Verfahren nach einem der vorherigen Ansprüche, bei dem
die aktuelle Empfangbarkeit aus der Auswertung von Empfangssignalen eines Organisationskanals (BCCH) abgeleitet wird.

13. Verfahren nach einem der vorherigen Ansprüche, bei dem
die Anforderung eines Dienst (S) durch die Mobilstation (MS) bei negativen Vergleichsergebnis gesperrt wird.

14. Verfahren nach einem der vorherigen Ansprüche, bei dem
die Funkschnittstelle nach einem TDD-Übertragungsverfahren mit breitbandigen Kanälen organisiert ist.

15. Funk-Kommunikationssystem mit einer Basisstationen (BS) und Mobilstationen (MS), wobei
die Basisstation (BS) enthält:
- eine Signalaufbereitungseinrichtung (SA) zum Formen von Sendesignalen für zu übertragende Informationen (ni, si, oi), wobei in einer Funkzelle (Z) der Basisstation (BS) mehrere Dienste (S) über eine Funkschnittstelle für die Mobilstationen (MS) angeboten werden,
- eine Steuereinrichtung (ST), die zu zumindest einem Dienst (S) eine individuelle Kenngröße (ke) bezüglich einer notwendigen Empfangbarkeit bestimmt und von der Basisstation (BS) gesendet wird, und
- eine Sendeeinrichtung (SE) zum Senden der Sendesignale, wobei ein Teil der Sendesignale die Kenngröße (ke) enthalten,
und
zumindest eine Mobilstation (MS) enthält:
- eine Empfangseinrichtung (EE) zum Empfangen und Auswerten der Kenngröße (ke),
- eine Auswerteeinrichtung (AE) zum Vergleichen der aktuellen Empfangbarkeit von Aussendungen der Basisstation (BS) mit der Kenngröße (ke), und
- eine Rufeinrichtung (RE) zum Anfordern eines Dienstes (S) in Abhängigkeit vom Vergleichsergebnis.

## Claims

1. Method for transmitting data between a base station (BS) and mobile stations (MS) in a radio communication system, in which
- in a radio cell (Z) of the base station (BS), a number of services (S) are provided for the mobile stations (MS) via a radio interface,
- an individual characteristic (ke) with respect to a necessary receivability is determined, and transmitted by the base station (BS), for at least one service (S),
by a mobile radio station (MS),
- the characteristic (ke) is received and evaluated,
- the current receivability of emissions of the base station (BS) is compared with the characteristic (ke), and
- depending on the result of the comparison, the service (S) is requested by the mobile station (MS).

2. Method according to Claim 1, in which the characteristic (ke) is a value related to a maximum permissible attenuation.

3. Method according to Claim 1, in which the characteristic (ke) is a value referred to the minimum required received field strength.

4. Method according to Claim 1, in which the characteristic (ke) is a value referred to a minimum required signal/noise ratio.

5. Method according to Claim 1, in which the characteristic (ke) is a value referred to a maximum permissible signal delay.

6. Method according to one of the preceding claims, in which at least one further characteristic (ke) for a second service (S) is derived from the transmitted characteristic (ke) by the mobile station (MS).

7. Method according to one of the preceding claims, in which a maximum data rate of the radio interface is taken into consideration for determining the characteristic (ke).

8. Method according to one of the preceding claims, in which a maximum data rate of the service (S) is taken into consideration for determining the characteristic (ke).

9. Method according to one of the preceding claims, in which a quality of service (QoS) of the service (S), which is to be guaranteed, is taken into consideration for determining the characteristic (ke).

10. Method according to one of the preceding claims, in which a current capacity utilization of the radio interface is taken into consideration for determining the characteristic (ke).

11. Method according- to one of the preceding claims, in which the individual services (S) are provided as voice services, emergency call services, short message services, teletext services, facsimile services, Internet service or image transmission services.

12. Method according to one of the preceding claims, in which the current receivability is derived from the evaluation of received signals of a control channel (BCCH).

13. Method according to one of the preceding claims, in which the request of a service (S) by the mobile station (MS) is blocked if the result of the comparison is negative.

14. Method according to one of the preceding claims, in which the radio interface is arranged with broadband channels in accordance with the TDD transmission method.

15. Radio communication system comprising a base station (BS) and mobile stations (MS), in which the base station (BS) contains the following:
- a signal conditioning device (SA) for forming transmit signals for information to be transmitted (ni, si, oi), while a number of services (S) are provided for the mobile stations (MS) via a radio interface in a radio cell (Z) of the base station (BS),
- a control device (ST) which determines an individual characteristic (ke) with respect to a necessary receivability for at least one service (S) and is transmitted by the base station (BS), and
- a transmitting device (SE) for transmitting the transmit signals, some of the transmit signals containing the characteristic (ke), and
at least one mobile station (MS) contains the following:
- a receiving device (EE) for receiving an evaluating the characteristic (ke),
- an evaluating device (AE) for comparing the current receivability of emissions of the base station (BS) with the characteristic (ke), and
- a calling device (RE) for requesting a service (S) in dependence of the result of the comparison.

## Revendications

1. Procédé pour la transmission de données entre une station de base (BS) et des stations mobiles (MS) dans un système de radiotélécommunication, dans lequel
- plusieurs services (S) sont offerts, dans une cellule (Z) de la station de base (BS), par le biais d'une interface radio pour les stations mobiles (MS),
- une grandeur caractéristique (ke) relative à une recevabilité nécessaire est déterminée, par rapport à au moins un service (S), et est envoyée par la station de base (BS),
- la grandeur caractéristique (ke) est reçue et analysée par une station mobile (MS),
- la recevabilité actuelle des émissions de la station de base (BS) est comparée à la grandeur caractéristique (ke) et
- en fonction du résultat de la comparaison, le service (S) est demandé par la station mobile (MS).

2. Procédé selon la revendication 1, dans lequel la grandeur caractéristique (ke) est une valeur rapportée à un affaiblissement maximum autorisé.

3. Procédé selon la revendication 1, dans lequel la grandeur caractéristique (ke) est une valeur rapportée à une intensité de champ reçue minimale requise.

4. Procédé selon la revendication 1, dans lequel la grandeur caractéristique (ke) est une valeur rapportée à un rapport signal/bruit minimum requis.

5. Procédé selon la revendication 1, dans lequel la grandeur caractéristique (ke) est une valeur rapportée à un temps de propagation du signal maximum autorisé.

6. Procédé selon l'une des revendications précédentes, dans lequel de la station mobile (MS) dérive, à partir de la grandeur caractéristique (ke) envoyée, au moins une autre grandeur caractéristique (ke) pour un deuxième service (S).

7. Procédé selon l'une des revendications précédentes, dans lequel on prend en compte, pour déterminer la grandeur caractéristique (ke), un débit maximum de données de l'interface radio.

8. Procédé selon l'une des revendications précédentes, dans lequel on prend en compte, pour déterminer la grandeur caractéristique (ke), un débit maximum de données du service (S).

9. Procédé selon l'une des revendications précédentes, dans lequel on prend en compte, pour déterminer la grandeur caractéristique (ke), une qualité de service (Qos) du service (S) qui doit être garantie.

10. Procédé selon l'une des revendications précédentes, dans lequel on prend en compte, pour déterminer la grandeur caractéristique (ke), une utilisation actuelle de l'interface radio.

11. Procédé selon l'une des revendications précédentes, dans lequel les services individuels (S) sont configurés en tant que services vocaux, services d'appel de détresse, services de messages courts, services de télétexte, services de fax, services Internet ou services de transmission d'images.

12. Procédé selon l'une des revendications précédentes, dans lequel la recevabilité actuelle est dérivée de l'analyse des signaux de réception d'un canal d'organisation (BCCH).

13. Procédé selon l'une des revendications précédentes, dans lequel la demande d'un service (S) par la station mobile (MS) est bloquée en cas de résultat négatif de la comparaison.

14. Procédé selon l'une des revendications précédentes, dans lequel l'interface radio est organisée selon un procédé de transmission TDD avec des canaux à large bande.

15. Système de radiotélécommunication comprenant une station de base (BS) et des stations mobiles (MS),
la station de base (BS) comprenant :
- un dispositif de mise en forme des signaux (SA) servant à mettre en forme des signaux d'émission pour des informations à transmettre (ni, si, oi), plusieurs services (S) étant offerts, dans une cellule (Z) de la station de base (BS), par le biais d'une interface radio pour les stations mobiles (MS),
- un dispositif de commande (ST) qui détermine, par rapport à au moins un service (S), une grandeur caractéristique (ke) individuelle relative à une recevabilité nécessaire, qui est envoyée par la station de base (BS), et
- un dispositif émetteur (SE) servant à envoyer les signaux d'émission, une partie des signaux d'émission contenant la grandeur caractéristique (ke), et
au moins une station mobile (MS) comprenant :
- un dispositif récepteur (EE) pour la réception et l'analyse de la grandeur caractéristique (ke),
- un dispositif d'analyse (AE) servant à comparer la recevabilité actuelle des émissions de la station de base (BS) avec la grandeur caractéristique (ke), et
- un dispositif d'appel (RE) servant à demander un service (S) en fonction du résultat de la comparaison.
